# EUROPÄISCHE PATENTSCHRIFT

(11) **EP 1 213 579 B1**
(45) Veröffentlichungstag und Bekanntmachung des Hinweises auf die Patenterteilung: **09.05.2007**
(21) Anmeldenummer: 01128869.3
(22) Anmeldetag: 05.12.2001
(51) Int. Cl.: G01N 21/86

(54) **System zur Analyse von Probeflüssigkeiten beinhaltend eine Lagekontrolleinheit**
System for the liquid sample analysis comprising a position control unit
Appareil pour l'analyse d'échantillons liquides comprenant une unité de contrôle de position

(30) Priorität: 08.12.2000 DE 10061336
(43) Veröffentlichungstag der Anmeldung: 12.06.2002
(73) Patentinhaber: Roche Diagnostics GmbH, 68305 Mannheim (DE); F. HOFFMANN-LA ROCHE AG, 4070 Basel (CH)
(72) Erfinder: Voelkel, Dirk, Dr., 69121 Heidelberg (DE)

(56) Entgegenhaltungen:
- EP-A- 0 618 443
- EP-A- 0 819 943
- EP-B- 0 779 983
- US-A- 5 246 858

## Beschreibung

Die vorliegende Erfindung fällt in das Gebiet der Anlayse von Probeflüssigkeiten durch Verwendung analytspezifischer, disposibler Testelemente. Die Erfindung ist in Analysesystemen einsetzbar, bei denen die Positionierung des Testelementes relativ zu einer Auswerteeinheit kritisch ist, wie dies insbesondere bei einer optischen Auswertung von Testelementen der Fall ist.

Im Stand der Technik haben sich Analysesysteme, die mit disposiblen Testelementen arbeiten, insbesondere für eine Bestimmung des Blutzuckerspiegels eingebürgert. Diese Geräte werden von Diabetikern verwendet, um den Blutzuckerspiegel zu überwachen und basierend hierauf das Essverhalten oder eine Gabe von Insulin zu regulieren. In diesem Bereich gibt es sogenannte Sensormeßgeräte, bei denen die Blutglukose auf Basis einer elektrochemischen Messung ermittelt wird und optische Systeme, bei denen eine analytabhängige Farbänderung auf dem Testelement dazu dient, die Analytkonzentration zu ermitteln. Derartige optische Systeme , die auf einer analytbedingten Farbänderung beruhen, sind auch zur Auswertung von Urinteststreifen oder von Testelementen für andere Parameter, wie Lactat, Kreatinin, Protein, Harnsäure, Leucocyten usw. bekannt. Insbesondere bei optischen Systemen ist die relative Positionierung des Analysenbereiches zur Auswerteoptik von entscheidender Bedeutung für die Präzision und Richtigkeit der durchgeführten Messung. Im Bereich der Analysesysteme zur Auswertung von Testelementen wurden daher einige Anstrengungen unternommen, eine bestimmungsgemäße Positionierung des Analysebereiches eines Testelementes sicherzustellen. Da die Testelemente bei kleineren Analysesystemen vom Benutzer in das Gerät eingeführt werden, muß neben die verläßliche Positionierung auch eine einfache Handhabbarkeit treten, um das System für den Benutzer attraktiv zu machen. Eine Halterung, die diesen Anforderungen entspricht und trotzdem recht einfach aufgebaut ist, ist in der EP B 0 618 443 beschrieben. Bei dieser Halterung wird der Teststreifen, der an seinem vorderen Ende (distales Ende) eine Ausnehmung aufweist, in die Halterung eingeschoben bis ein Dorn in die Ausnehmung eingreift und den Streifen in Längsrichtung positioniert. Zur Positionierung in Querrichtung weist die Halterung Führungselemente auf. Dadurch, daß das Testelement im Bereich des Dorns erhöht gehaltert und durch ein Andruckelement niedergedrückt wird, nimmt es eine leicht gebogene Form ein, die den Analysebereich des Testelementes aufgrund der Flexibilität des Teststreifens auf die Unterlage drückt. Unterhalb des Analysebereiches befindet sich ein Fenster oder eine Ausnehmung, so daß eine optische Auswertung durch diese Ausnehmungen bzw. durch das Fenster möglich ist. Auch bei einer an sich ausgereiften Halterung, wie der in EP 0 618 443 beschriebenen, kann es jedoch nicht ausgeschlossen werden, daß der Benutzer das Testelement an der der Halterung abgewandten Seite (proximales Ende) so anhebt, daß sich die Positionierung des Analysebereiches relativ zum Analysegerät ändert und das Analyseergebnis verfälscht wird. Dieses Problem stellt sich bei weniger ausgereiften Teststreifenhalterungen in verstärkter Form. Des Weiteren beschreibt das Dokument US 5,246,858 eine Positionserkennung in einen Blutzuckermeßgerät, bei dem eine Markierung auf einen Teststreifen vermessen wird. Auf diese Weise kann das System erkennen, ob der Teststreifen mit der Vorderseite bestimmungsgemäß eingeführt wurde. Die Folge einer solchen Fehlpositionierung sind falsche Meßwerte. Insbesondere im Bereich des Blutzuckermonitorings durch die Diabetiker selbst können diese Fehlmessungen fatale Folgen nach sich ziehen. Wird dem Benutzer beispielsweise ein zu hoher Blutzuckerspiegel suggeriert, so wird er unter Umständen in Reaktion hierauf eine zu hohe Insulindosis injizieren, die zu einer im Extremfall tödlichen Hypoglykämie führt. Es besteht daher ein dringendes Bedürfnis, die beschriebenen Fehlpositionierungen vermeiden zu können oder zumindest eine Fehlpositionierung erkennen zu können, um den Benutzer auf den Fehler aufmerksam zu machen.

Erfindungsgemäß wird diese Aufgabe durch ein System zur Analyse von Probeflüssigkeiten durch Auswertung von Testelementen mit einer Analyseeinheit gelöst, bei dem ein zu analysierendes Testelement durch eine Halterung in eine Analyseposition relativ zur Analyseeinheit positioniert ist und das System eine Lagekontrolleinheit aufweist, mit der festgestellt werden kann, ob ein Analysebereich des Testelementes bestimmungsgemäß zur Analyseeinheit positioniert ist. Die Lagekontrolleinheit weist eine Lichtquelle zur Bestrahlung einer Fläche des Testelementes, vorzugsweise des Analysebereiches, sowie einen Detektor zur Detektion von der Fläche reflektierten Lichtes auf. Lichtquelle und Detektor sind derartig zueinander positioniert, daß die Lichtintensität von spiegelnd reflektierter Strahlung am Detektor bei bestimmungsgemäßer Positionierung des Testelementes derartig verschieden ist von einer Lichtintensität bei Fehlpositionierung dass basierend auf den verschiedenen Lichtintensitäte der spiegelnde reflektierte Strahlung eine Fehlpositionierung erkannt werden kann und mit einer Auswerteeinheit bei bestimmungsgemäße Positionierung eines Testelementes in Längsrichtung eine vertikale Lageabweichung eines Testelementes aufgrund der Lichtintensität am Detektor erkannt werden kann. Bei einer ersten Ausführungsform eines solchen Systems sind Lichtquelle und Detektor so zueinander positioniert, daß spiegelnd von dem Testelement reflektierte Strahlung der Lichtquelle auf den Detektor fällt, wenn das Testelement richtig positioniert ist. Wird das Testelement hingegen aus der bestimmungsgemäßen Positionierung herausgebracht, beispielsweise indem das der Halterung abgewandte Ende des Testelementes angehoben wird, so bewegt sich der Lichtkegel spiegelnd reflektierter Strahlung so, daß er nunmehr nicht direkt auf den Detektor fällt und die Lichtintensität am Detektor abnimmt. Bei einer zweiten Ausführungsform wird die inverse Vorgehensweise gewählt, das heißt, spiegelnd reflektierte Strahlung fällt bei bestimmungsgemäßer Positionierung nicht auf den Detektor. Wird jedoch eine Fehlpositionierung verursacht, so trifft der Lichtkegel spiegelnd reflektierter Strahlung den Detektor, wodurch wiederum die Fehlpositionierung erkannt werden kann.

Ein Analysesystem mit einer Lagekontrolleinheit gemäß der vorliegenden Erfindung bietet einem Anwender somit den Vorteil, daß fehlerhafte Analysenergebnisse durch Erkennung einer Fehlpositionierung vermieden werden können. Es ist auch möglich, den Benutzer auf eine Fehlpositionierung hinzuweisen, so daß er diese beseitigt und mit dem gleichen Testelement die Analyse dann zuverlässig durchgeführt werden kann. Bei diesen Ausführungsformen wird daher vermieden, daß der Benutzer ein neues Testelement verwenden muß, was Kosten verursachen würde und aus Handhabungsgründen nachteilig ist, da der Benutzer eine erneute Entnahme von Probeflüssigkeit (i.d. Regel Anstechen der Fingerbeere) vornehmen muß.

Die vorliegende Erfindung kann vorteilhaft bei Analysesystemen eingesetzt werden, bei denen eine Fehlpositionierung eines Testelementes zu einer Verfälschung von Analyseergebnissen führt. In erster Linie sind dies optisch messende Systeme, bei denen die Analyse durch Bestrahlen eines Analysebereiches des Testelementes und Auswertung reflektierter oder transmittierter Strahlung erfolgt. Ein bevorzugter Anwendungsbereich ist weiterhin der Bereich relativ kleiner Analysensysteme, die vom Patienten selbst bedient werden. Ein solches System ist beispielsweise in dem Dokument EP B 0 618 443 beschrieben. Derartige Geräte sind im Handel beispielsweise unter den Bezeichnungen Accutrend®, Accu Check®, Glucotrend® und Glucometer® erhältlich. Von besonderer Bedeutung ist die Erfindung in solchen Systemen, bei denen Testelemente eingesetzt werden, die entlang ihrer Längsachse verbiegbar sind und die vom Analysegerät nur an einem Ende gehaltert werden. Die Bedeutung des letztgenannten Kriteriums wird beim Vergleich der vorliegenden Erfindung mit dem Dokument EP B 0 779 983 besonders deutlich. Bei dem Gerät gemäß EP B 0 779 983 wird eine Teststreifenhalterung verwendet, bei der der Teststreifen sowohl an seinem distalen Ende als auch in einem Bereich gehaltert wird, der proximal vom Analysebereich gelegen ist. Hierdurch wird eine Verbiegung des Teststreifens entlang seiner Längsachse in der Region des Analysebereichs vermieden und somit auch etwaige hieraus resultierende Fehlpositionierungen. Der Preis, der hierfür gezahlt wird, ist jedoch im Hinblick auf den Benutzerkomfort recht hoch. Zum einen ist das Einschieben des Testelementes in die Halterung relativ umständlich und zum anderen muß der mit Probeflüssigkeit (i.d. Regel Blut) befeuchtete Analysebereich durch eine Verjüngungsstelle hindurchgeschoben werden. Letzteres führt zu einer Kontamination der Teststreifenhalterung, weshalb die in dem System verwendete Halterung auch entnehmbar gestaltet werden muß, um gereinigt werden zu können. Im Rahmen der vorliegenden Erfindung werden hingegen bevorzugt solche Testelementhalterungen verwendet, bei denen das Testelement lediglich an seinem distalen Ende gehaltert wird und der übrige Bereich des Testelementes von der Oberseite her frei zugänglich ist. Dies bietet dem Benutzer den Komfort, daß das Einführen des Testelementes in die Halterung einfach ist und, falls vom Benutzer gewünscht, eine Aufgabe von Probeflüssigkeit auch erfolgen kann, während das Testelement bereits für eine Analyse bestimmungsgemäß im Analysengerät positioniert ist. Die Zugänglichkeit des Testelementes in dieser Weise gestaltet das Analysegerät in seiner Erscheinungsweise auch sehr offen und somit ansprechend für den Benutzer.

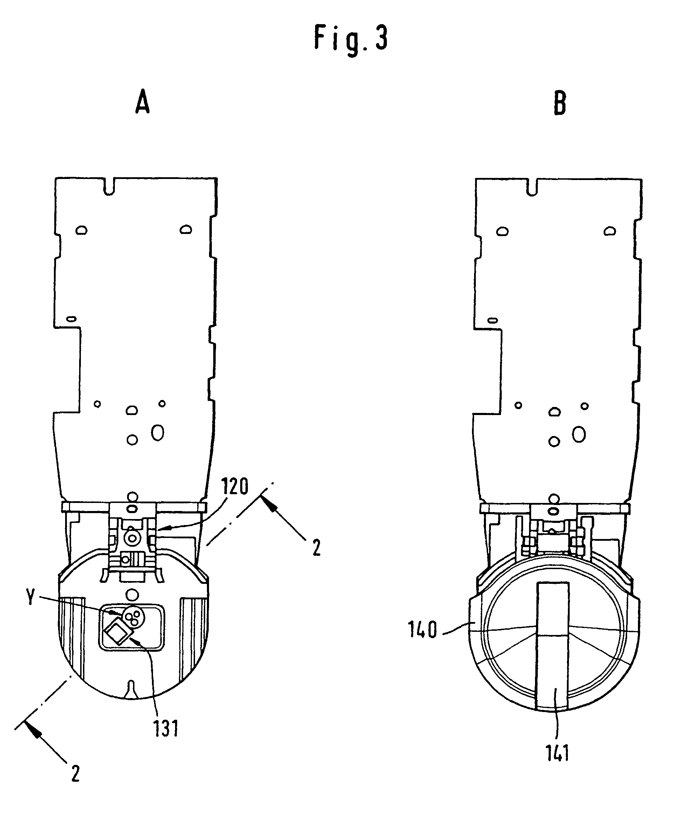

Wie bereits erwähnt, kann die vorliegende Erfindung insbesondere im Bereich optisch arbeitender Analysensysteme eingesetzt werden, die als solche hinlänglich bekannt sind und daher an dieser Stelle nicht im Detail beschrieben werden. Erwähnenswert ist jedoch, daß die Erfindung besonders gut für Analysengeräte geeignet ist, bei denen eine Analyse durch Bestrahlung eines Analysebereiches und Auswertung diffus reflektierter Strahlung erfolgt. Eine entsprechende Geräteoptik ist beispielsweise in dem Dokument EP 0 819 943, insbesondere in den Figuren 3 bis 5 gezeigt und dem zugehörigen Text beschrieben.

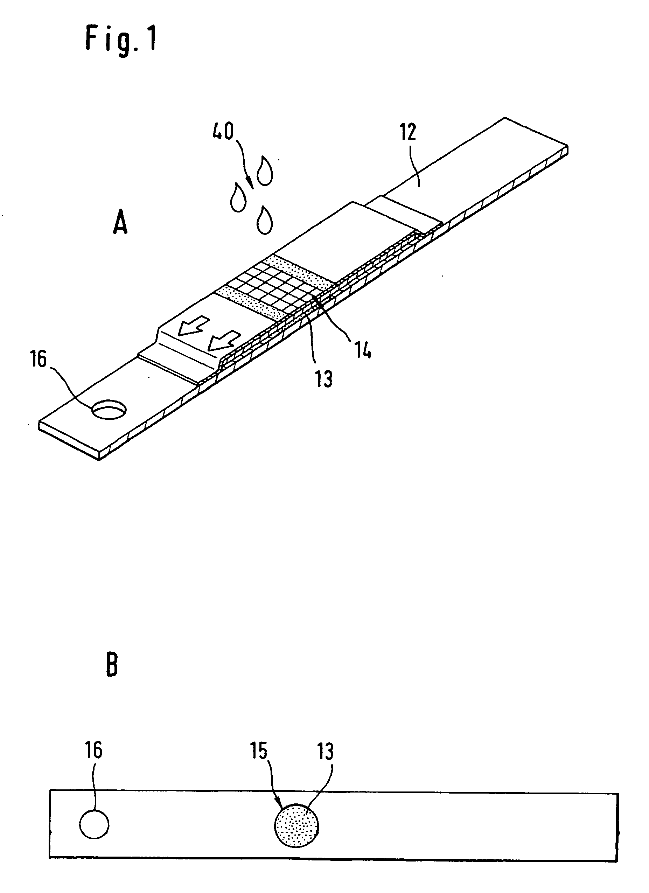

Testelemente, die zur Verwendung im erfindungsgemäßen System verwendet werden sollen, brauchen prinzipiell keine besonderen Eigenschaften gegenüber den im Stand der Technik bekannten Testelementen für die o.g. Geräte aufzuweisen. Die vorliegende Erfindung kommt jedoch insbesondere bei solchen Testelementen zum tragen, die entlang ihrer Längsachse verbiegbar sind und die gemeinhin als Teststreifen bezeichnet werden. Derartige Streifen haben sich besonders deshalb durchgesetzt, weil sie einfach und kostengünstig zu fertigen sind auch vom Benutzer einfach zu handhaben sind. Sie besitzen im Regelfall einen streifenförmigen Träger aus einem flexiblen Kunststoff. Typische Abmessungen liegen beispielsweise im Bereich von 4cm x 7mm und 1mm Dicke. Auf oder in diesem Streifen ist ein Analysenbereich angeordnet, der mit Probeflüssigkeit in Kontakt gebracht wird und eine optisch detektierbare Veränderung in Abhängigkeit von der Analytkonzentration liefert. Der Aufbau derartiger Testelemente ist beispielsweise in dem Dokument US 6,036,919 beschrieben. Da die Teststreifenarchitektur und auch die Teststreifenchemie im Stand der Technik hinlänglich bekannt ist, wird an dieser Stelle nicht näher darauf eingegangen. Im Rahmen der vorliegenden Erfindung ist jedoch von Bedeutung, daß das Testelement, vorzugsweise auch der Analysebereich, auftreffende Strahlung zumindest teilweise spiegelnd reflektiert. Wie bereits erwähnt, dient die Detektion spiegelnd reflektierter Strahlung zur Lagekontrolle des Analysebereiches. Es ist bevorzugt, wenn die Lagekontrolle direkt am Analysebereich selbt ausgeführt wird, sollte dies jedoch nicht möglich sein, weil beispielsweise der Anteil spiegelnd reflektierter Strahlung gegenüber dem Anteil diffus reflektierter Strahlung zu klein ist, so kann auch ein dem Analysebereich benachbarter Bereich des Testelementes zur Lagekontrolle herangezogen werden. Diese wird im Regelfall ohne besondere Vorkehrungen möglich sein, da die gebräuchlichen Trägermaterialien aus Kunststoff eine ausreichend hohe spiegelnde Reflektivität aufweisen. Falls notwendig, kann jedoch auch der Bereich des Testelementes, an dem die Lagekontrolle durchgeführt werden soll, so hergerichtet werden, beispielsweise durch Aufdampfen oder Aufsputtern eines reflektierenden Materials, daß eine Lagekontrolle aufgrund spiegelnd reflektierter Strahlung leicht möglich ist. Alternativ kann auch ein entsprechendes Material für den Träger des Testelementes ausgewählt werden. Wie bereits erwähnt, ist es im Regelfall jedoch nicht notwendig, die Lagekontrolle außerhalb des Analysebereiches vorzunehmen, da der Analysebereich im Regelfall selbst eine ausreichend hohe spiegelnde Reflektion aufweist. Selbst Materialien, die dem Betrachter als diffus erscheinen, wie z.B. imprägnierte Vliese, weisen von Natur aus einen Anteil spiegelnder Reflektion auf, der für eine analytische Auswertung des Analysebereiches mit diffus reflektierender Strahlung häufig unerwünscht ist. In Figur 1 ist der Aufbau eines Testelementes (10), welches unter dem Namen Gluccotrend® im Handel befindlich ist, dargestellt. Es ist zu erkennen, daß die Reagenzmatrix (14) auf einer transparenten Folie (13) angeordnet ist. Bei diesem Teststreifen wird die Probe (40) von der Oberseite aufgegeben und eine analytische Auswertung erfolgt durch Bestrahlung der Reagenzmatrix von der Unterseite und Detektion diffus reflektierter Strahlung. Der durch die Ausnehmung (15) im Träger optisch zugängliche Bereich stellt somit den Analysebereich des Testelementes dar. Bedingt durch die Folie (13), welche spiegelnd reflektierende Eigenschaften aufweist, ist mit diesem Teststreifen eine Lagekontrolle unter Verwendung spiegelnd reflektierter Strahlung einfach möglich, auch wenn die Reagenzmatrix als solche vorwiegend diffus reflektierende Eigenschaften aufweist. Aus der Figur 1 ist weiterhin eine Ausnehmung (16) am distalen Ende des Streifens zu erkennen, mit der wie bereits beschrieben, eine Halterung erfolgt. Eine genauere Beschreibung des Testelementes, auf die hiermit Bezug genommen wird, findet sich in der US 6,036,919.

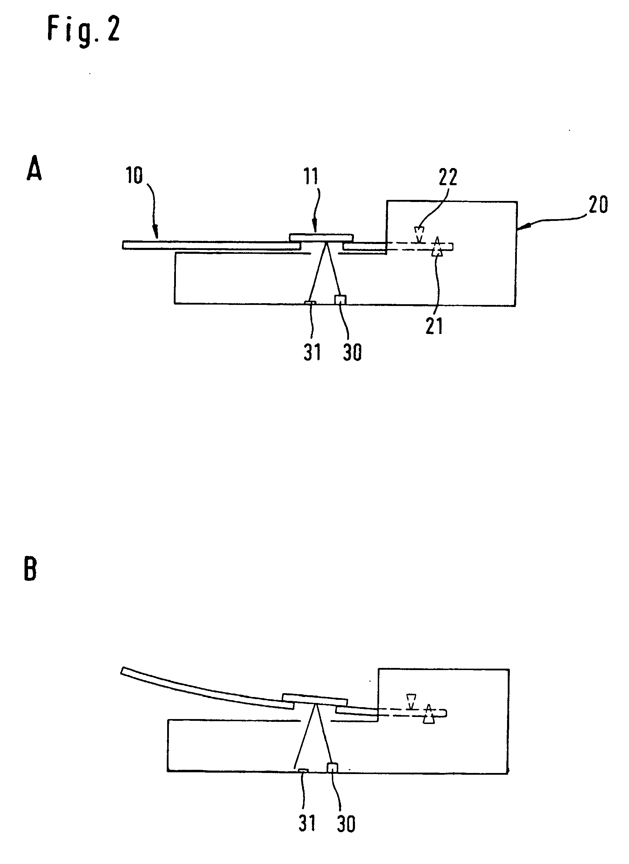

Die Funktionsweise der Erfindung ist anhand der Figur 2 schematisch dargestellt. Der Teststreifen (10) wird mit seinem distalen Ende in die Analyseeinheit (20) so eingeschoben, daß eine Ausnehmung des Testelementes am distalen Ende von einem Dorn (21) gehaltert wird und das Testelement proximal der Ausnehmung durch eine Kante (22) niedergedrückt wird. Figur 2A zeigt die bestimmungsgemäße Positionierung des Testelementes zur Auswertung durch eine Analyseeinheit. Das Gerät (20) besitzt unterhalb des Analysebereiches (11) des Testelementes eine Ausnehmung, durch die eine Bestrahlung des Analysebereiches von der Unterseite möglich ist. Unterhalb der Ausnehmung ist die Analyseeinheit angeordnet, welche eine Lichtquelle (30) und einen Detektor (31) beinhaltet. Als Lichtquelle sind die zu diesem Zweck im Stand der Technik bekannten Lichtquellen geeignet. Insbesondere können Leuchtdioden eingesetzt werden. Als Detektor (31) kann ein Halbleiterdetektor, wie eine Fotodiode oder ein Fotovoltaisches Element verwendet werden. Wie aus Figur 2A ersichtlich, ist die Lichtquelle (30) so angeordnet, daß sie den Analysebereich (11) in einem spitzen Winkel zur Flächennormalen beleuchtet. Der Detektor (31) ist so positioniert, daß spiegelnd von dem Analysebereich reflektierte Strahlung auf ihn fällt. Wird der Streifen, wie in Figur 2B dargestellt, aus seiner bestimmungsgemäßen Positionierung entfernt, was z. B. durch Anheben des Testelementendes durch den Benutzer oder Aufliegen des proximalen Teststreifenendes auf einem Gegenstand passieren kann. Aus Figur 2B geht hervor, daß die vom Analysebereich spiegelnd reflektierte Strahlung nunmehr nicht auf den Detektor fällt, so daß das am Detektor anliegende Signal kleiner ist als bei bestimmungsgemäßer Positionierung gemäß Figur 2A. Das Herausbewegen des Testelementes aus der bestimmungsgemäßen Positionierung kann beispielsweise durch ein quasi kontinuierliches Monitoring des am Detektor (31) anliegenden Signales erfolgen und eine Fehlpositionierung an einer Signalabnahme in einer Folge von Messungen erkannt werden. Da solch eine quasi kontinuierliche Meßwertaufnahme mit einem relativ hohen Energieverbrauch einhergeht, ist es bevorzugt, die Positionierung des Testelementes bzw. des Analysebereiches lediglich dann zeitnah zu kontrollieren, wenn auch eine analytische Auswertung des Testelementes vorgenommen wird. Eine Fehlpositionierung kann bei einem solchen Verfahren durch Vergleich des Sensorsignales mit einem Schwellenwert, mit einem Leerwert ohne Testelement oder einem anderen Meßwert bei eingelegtem Testelement erfolgen. Weitere bevorzugte Auswertemethodiken werden im Zusammenhang mit einem System beschrieben, das auch ein Optikelement für eine analytische Auswertung des Testelementes zeigt, welches aus Gründen der Klarheit in Figur 2 weggelassen wurden.

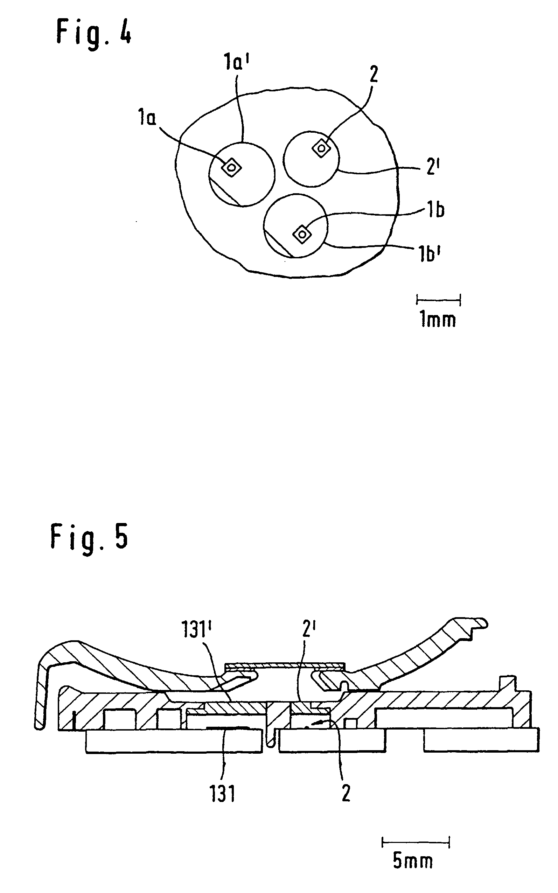

Figur 3A zeigt eine Aufsicht auf eine Geräteplatine mit darauf befestigter Testelementhalterung (120) sowie Optikbereich mit einem Halbleiterdetektor (131) sowie einer Beleuchtungsoptik (Y) umfassend drei direkt auf der Platine gebondete Leuchtdioden, sowie Linsen oberhalb der Leuchtdioden. Die Beleuchtungsoptik wird in Zusammenhang mit Figur 4 noch näher erläutert werden. In Figur 3B ist die Platine der Figur 3A dargestellt, jedoch zusätzlich mit einem abnehmbaren Kunststoffeinsatz (140). Der Einsatz (140) besitzt eine Rinne (141) zur Aufnahme von Testelementen und zur seitlichen Führung der Testelemente. Durch die genannte seitliche Führung in Zusammenwirken mit der Testelementhalterung (120), die in eine Ausnehmung eines Testelementes eingreift, wie in Figur 2 schematisch dargestellt, wird eine laterale Halterung des Testelementes sichergestellt. Gegenstand der vorliegenden Erfindung ist die Erkennung von Lageabweichungen in der Vertikalen. Befindet sich ein Testelement in der Teststreifenaufnahme gemäß Figur 3B, so kann es durch Unachtsamkeit oder systematische Betriebsfehler dazu kommen, daß das aus dem Gerät herausstehende Testelementende angehoben wird, und sich der Analysebereich des Testelementes von der Auswerteoptik entfernt. Zur Erkennung einer solchen Lageabweichung und zur analytischen Auswertung eines Testelementes dient die Geräteoptik im Zusammenwirken mit einer geeigneten Auswerteeinheit.

Figur 4 zeigt den Ausschnitt (Y) aus Figur 3A, der die Leuchtdioden und die darüber liegenden Linsen (1a', 1b', 2') zeigt. Aus Figur 4 sind auch Abmessungen erkennbar, aus denen die starke Miniaturisierung des Analysesystems erkennbar wird. In Figur 4 sind drei Lichtquellen erkennbar, von denen zwei Leuchtdioden (1a und 1b) gleich weit vom Detektor (131) entfernt sind. Diese Leuchtdioden dienen dazu, sowohl eine analytische Auswertung des Testelementes vorzunehmen als auch eine Erkennung, ob eine ausreichende Probenmenge hinreichend homogen auf den Analysebereich aufgegeben wurde. Diese, als Unterdosierungserkennung bezeichnete Funktionalität ist in der europäischen Patentanmeldung EP A 0 819 943 beschrieben. Die Leuchtdioden und der Detektor sind geometrisch so zueinander angeordnet, daß lediglich diffus reflektierte Strahlung von der Unterseite des Analysebereiches beim Detektor ankommt. Die Leuchtdiode 2 hingegen, die zur Lagekontrolle verwendet wird, ist so angeordnet, daß bei bestimmungsgemäßer Positionierung des Analysebereiches, d. h. wenn der Teststreifen auf der Bodenfläche der Rille (141) aufliegt, keine spiegelnd reflektierte Strahlung in den Detektor fällt. Wird hingegen das Testelement an seinem nicht gehalterten Ende (proximales Ende) angehoben, so fällt zunehmend spiegelnd reflektierte Strahlung in den Detektor und das Signal steigt an. Die geometrische Anordnung der Einheiten ist in Figur 5 als Schnitt durch die Linie 2-2 in Figur 3A näher dargestellt. Die Lichtquelle 2 ist in der Figur 5 lediglich als kleiner schwarzer Punkt zu erkennen, der unterhalb der Linse 2'angeordnet ist. Der Detektor (131) ist aufgrund seiner flächigen Ausdehnung besser zu erkennen. Der Bereich zwischen Detektor und Lichtquelle ist aus schwarzem Kunststoff gefertigt, um als Lichtfalle zu dienen. Weiterhin ist oberhalb des Detektors (131) ein optisches Fenster (131') angeordnet, das den Raumwinkel für einfallendes Licht begrenzt.

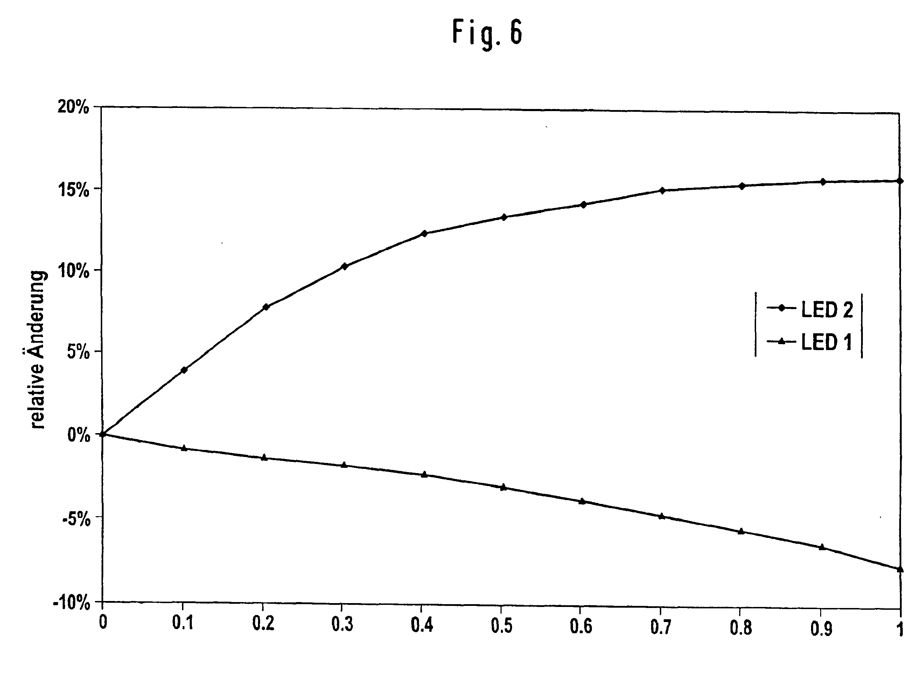

Figur 6 zeigt die relative Remission, die am Detektor (131) bei Aktivierung der verschiedenen Leuchtdioden erhalten wird in Abhängigkeit von dem Abstand zwischen der Auflagefläche des Testelementes (d. h. dem Boden der Rinne (141) und dem Analysebereich). Die Abszisse gibt den genannten Abstand in mm wieder. Auf der Ordinate ist der Quotient zwischen der Intensität am Detektor bei gegebenem Abstand bei bestimmungsgemäßer Positionierung angegeben. Die obere, mit Rauten gekennzeichnete Kurve gibt den Quotienten der Signale für die Leuchtdiode 2 zur Positionserkennung wieder. Wie zu erkennen, steigt der Quotient und somit auch die Signalintensität bei Entfernen des Analysebereiches von der bestimmungsgemäßen Position an. Wie bereits zu Figur 5 dargelegt wurde, resultiert dies daraus, daß der Anteil spiegelnd reflektierter Strahlung, der auf den Detektor fällt, zunimmt. Die untere Kurve, welche mit Dreiecken gekennzeichnet ist, gibt den Quotienten der vorstehend beschriebenen Signalwerte bei Aktivierung der Leuchtdiode 1a wieder. Wie zu erkennen, nimmt der Quotient und somit auch die Intensität ab, wenn der Analysebereich von der optischen Einheit entfernt wird. Dieser Effekt resultiert daraus, daß der Raumwinkel, von dem der Detektor Strahlung empfängt, abnimmt. Als besonders günstig zu Erkennung einer Fehlpositionierung des Testelementes bzw. eines Abhebens des Testelementes von der Auflage, hat es sich erwiesen, die Differenz aus der mit der Leuchtdiode 2 erhaltenen Intensität und der mit Leuchtdiode 1 erhaltenen Intensität zu bilden. Diese Differenz, in die auch vorteilhaft relative Intensitäten einbezogen werden können, ist noch empfindlicher auf eine Lageänderung als das Signal der Leuchtdiode 2 allein.

Zur Durchführung einer Lagekontrolle werden die Leuchtdioden 1a, 1b und 2 sequentiell aktiviert. Dies kann über einen Mikroprozessor gesteuerte Steuereinheit erfolgen, die auch als Auswerteeinheit der mit dem Detektor erhaltenen Intensitätswerte dienen kann. Zur Lagekontrolle wird die Lichtquelle 2 aktiviert und das in diesem Zeitintervall anliegende Intensitätssignal gespeichert. Vorteilhaft gegenüber einer zeitlich konstanten Betriebsweise ist eine solche, bei der dem Ansteuersignal der Leuchtdiode eine Frequenz überlagert wird, und das am Detektor empfangene Signal über einen Lock-in Verstärker ausgewertet wird, so daß Umlichteinflüsse eliminiert werden können. Eine Lagekontrolle ist insbesondere zu zwei Zeitpunkten der Analyse wichtig. Der eine Zeitpunkt ist die Messung des Leerwertes. Hier wird durch die Lagekontrolle sichergestellt, daß der Leerwert nicht durch ein Wegbewegen des Analysebereiches von der Meßoptik verfälscht wird. In einem solchen Fall würde das Meßgerät nämlich einen falschen Leerwert für die analytische Auswertung zugrunde legen und / oder ein falsches Timing des übrigen Meßablaufes verursachen.

Nach der Leerwertmessung wird das Testfeld auf eine zeitliche Veränderung des Signals überwacht (z. B. eine Messung alle Sekunde). Wenn sich dieses Signal verändert, wird üblicherweise auf einen Probenauftrag geschlossen (oder auf ein Entfernen des Streifens bei einer Probenaufgabe außerhalb des Gerätes) und es wird umgeschaltet auf eine Kinetikverfolgung.

Die Kinetikverfolgung beruht auf der Tatsache, daß es sich bei den beobachteten Signalen um zeitlich veränderliche Signale handelt, da üblicherweise nach Auftragung der Probeflüssigkeit eine chemische Reaktion mit einer Kinetik im Analysefeld abläuft. Diese zeitliche Veränderung wird durch kontinuierliche oder in Intervallen durchgeführte Messung (typischerweise zwischen 2s und 0,5s) detektiert. Eine Lageerkennung / Kontrolle bei Leerwertmessung ist auch wichtig, um zu verhindern, daß durch eine Lageänderung des Testelementes eine Verfolgung der Kinetik gestartet wird, obwohl noch keine Probe aufgegeben wurde. Dies würde zu vollständig falschen Ergebnissen führen.

Der zweite kritische Punkt ist die analytische Auswertung als solche, welche vorzugsweise dadurch ausgelöst wird, daß die zeitliche Signaländerung am Detektor bei Beleuchtung mit LED 1a oder 1b einen vorgegebenen Schwellenwert unterschreitet. Ist dies der Fall, so wird die eigentliche analytische Messung eingeleitet, wozu mit den Lichtquellen 1a und 1b nacheinander gemessen und vorzugsweise ein Mittelwert der Detektorsignale zur Auswertung herangezogen wird. In engem zeitlichen Abstand, d. h. vorzugsweise in einem Zeitabstand von weniger als 1 Sekunde, wird ebenfalls eine Lageerkennung durchgeführt, um sicherzustellen, daß die Detektorsignale während einer bestimmungsgemäßen Positionierung des Testelementes aufgezeichnet wurden. Weiterhin können zeitlich auseinanderliegende Meßwerte zu einem verfälschten Analysenergebnis führen, da die chemische Reaktion im Analysebereich weiterläuft.

Wird bei der Leerwertmessung oder bei der analytischen Auswertung eine Fehlpositionierung erkannt, so gibt das Gerät eine entsprechende Fehlermeldung aus. Vorteilhafterweise weist das Gerät durch eine entsprechende Anzeige in einem Display oder eine akustische Anzeige auf die Fehlpositionierung hin, so daß der Benutzer die Fehlpositionierung beseitigen kann. Durch geeignete Führung des Meßzyklus kann es so in einer Vielzahl von Fällen erreicht werden, daß die Messung und auch das Testelement mit Probe nicht verworfen zu werden braucht.

## Patentansprüche

1. System zur Analyse von Probeflüssigkeiten durch Auswertung von Testelementen mit einer Analyseeinheit (20), wobei ein zu analysierendes Testelement(10) durch eine Halterung (21, 22, 120, 140) in einer Analyseposition relativ zur Analyseeinheit positioniert wird und das System weiterhin eine Lagekontrolleinheit zur Kontrolle, ob ein Analysebereich des Testelementes bestimmungsgemäß zur Analyseeinheit positioniert ist, beinhaltet, wobei die Lagekontrolleinheit
- eine Lichtquelle (30, 2) zur Bestrahlung einer Fläche des Testelementes, vorzugsweise des Analysebereiches (11),
- einen Detektor (31, 131) zur Detektion von der Fläche reflektierten Lichtes und
- eine Auswerteeinheit umfaßt,
und
Lichtquelle und Detektor so zueinander positioniert sind, daß die Lichtintensität von spiegelnd reflektierter Strahlung am Detektor bei bestimmungsgemäßer Positionierung des Testelementesderartig verschieden ist von einer Lichtintensität bei Fehlpositionierung, dass basierend auf den verschiedenen Lichtintensitäten der spiegelnd reflektierten Strahlung eine Fehlpositionierung erkannt werden kann **dadurch gekennzeichnet dass** die Auswerteeinheit bei bestimmungsgemäßer Positionierung des Testelementes in Längsrichtung eine vertikale Lageabweichung des Testelementes aufgrund der Lichtintensität am Detektor erkennt.

2. System gemäß Anspruch 1, bei dem Lichtquelle, und Detektor relativ zueinander so angeordnet sind, daß bei bestimmungsgemäßer Positionierung des Testelementes spiegelnd reflektierte Strahlung auf den Detektor fällt und der Anteil von spiegelnd reflektierter Strahlung abnimmt, wenn eine Fehlpositionierung eintritt.

3. System gemäß Anspruch 1, bei dem Lichtquelle und Detektor relativ zueinander so angeordnet sind, daß bei bestimmungsgemäßer Positionierung des Testelementes der Anteil der vom Testelement spiegelnd reflektierten Strahlung klein oder Null ist und bei Fehlpositionierung des Testelementes größer ist.

4. System gemäß Anspruch 1, bei der mit der Analyseeinheit eine Bestrahlung des Analysebereiches vorgenommen wird und eine Konzentrationsbestimmung eines Analyten aufgrund von dem Analysebereich reflektierter oder durch den Analysebereich transmittierter Strahlung erfolgt.

5. System gemäß Anspruch 4, bei dem die Analyseeinheit zur Detektion von Strahlung den Detektor der Lagekontrolleinheit verwendet.

6. System gemäß Anspruch 4, bei dem die Analyseeinheit zur Bestrahlung des Analysebereiches die Lichtquelle der Lagekontrolleinheit verwendet.

7. System gemäß Anspruch 1, bei dem die Halterung derartig ausgestaltet ist, dass ein Testelement, welches entlang seiner Längsachse verbiegbar ist, im Bereich des einen Endes der Achse von der Halterung derartig gehaltert wird daß sich bei Verbiegung des Testelementes entlang der Längsachse eine Fehlpositionierung eines Analysebereiches, der von dem gehalterten Ende beabstandet ist, relativ zur Analyseeinheit einstellt.

8. System gemäß Anspruch 1 oder 5, bei dem die Analyseeinheit eine Meßlichtquelle besitzt und eine Steuerungseinheit die Meßlichtquelle und die Lichtquelle der Lagekontrolleinheit sequentiell ansteuert.

9. System gemäß Anspruch 8, bei dem die Meßlichtquelle den Analysebereich unter einem Winkel α und die Lichtquelle der Lagekontrolleinheit den Analysebereich unter einem Winkel β gegenüber der Flächennormalen bestrahlt, wobei gilt: α<β.

10. System gemäß Anspruch 1, bei dem die Lagekontrolleinheit eine zweite Lichtquelle beinhaltet, die relativ zum Detektor so positioniert ist, daß sich die Lichtintensität dieser von dem Testelement reflektierten Strahlung am Detektor umgekehrt zu der Lichtintensität der Lichtquelle zur Positionskontrolle verändert wenn das Testelement aus der bestimmungsgemäßen Positionierung herausbewegt wird.

11. System gemäß den Ansprüchen 2 und 10, bei dem der Anteil von spiegelnd reflektierter Strahlung der Lichtquelle zur Positionskontrolle am Detektor zunimmt wenn eine Fehlpositionierung eintritt.

12. Verfahren zur Analyse von Probeflüssigkeiten durch Auswertung von Testelementen mit einer Analyseeinheit, bei dem mit einer Lagekontrolleinheit kontrolliert wird, ob ein Analysebereich (11) des Testelementes bestimmungsgemäß zur Analyseeinheit positioniert ist, wozu eine Fläche des Testelementes, vorzugsweise der Analysebereich, von einer Lichtquelle (30, 2) bestrahlt, von der Fläche reflektierte Strahlung mit einem Detektor (31, 131) detektiert und ein vom Detektor geliefertes Signal von einer Auswerteeinheit erfaßt wird, um die Positionierung des Analysebereiches zu kontrollieren, wobei Lichtquelle und Detektor so zueinander positioniert sind, daß die Intensität von spiegelnd von dem Testelement reflektierter Strahlung am Detektor bei bestimmungsgemäßer Positionierung des Analysebereiches derartig verschieden von einer Intensität bei Fehlpositionierung ist **dadurch gekennzeichnet, dass** basierend auf den verschiedenen Lichtintensitäten der spiegelnd reflektieren Strahlung eine vertikale Lageabweichnung des Testelementes bei bestimmungsgemäßer Positionierung des Testelementes in Längsrichtung erkannt werden kann.

13. Verfahren gemäß Anspruch 12, bei die Analyseeinheit eine separate Lichtquelle (1a, 1b) aufweist, jedoch zur Detektion den Detektor (131) der Lagekontrolleinheit verwendet und die Lichtquelle (2) der Lagekontrolleinheit zu einem Zeitpunkt T_{K} und die Meßlichtquelle zu einem Zeitpunkt T_{A} angesteuert werden und aufgrund des zum Zeitpunkt T_{K} vom Detektor gelieferten Signales eine Kontrolle der Lage des Analysebereiches und aufgrund des zum Zeitpunkt T_{A} gelieferten Signals eine Auswertung zur Ermittlung der Konzentration eines Analyten erfolgt.

14. Verfahren gemäß Anspruch 13, bei dem die Zeitpunkte T_{K} und T_{A} weniger als eine Sekunde auseinander liegen.

## Claims

1. System for analysing sample liquids by evaluating test elements with an analytical unit (20) in which a test element (10) to be analysed is positioned by a holder (21, 22, 120, 140) in an analytical position relative to the analytical unit and the system additionally comprises a position control unit to check whether an analytical area of the test element is correctly positioned relative to the analytical unit wherein the position control unit comprises
- a light source (30, 2) to irradiate an area of the test element and preferably the analytical area (11),
- a detector (31, 131) to detect light reflected from the area and
- an evaluation unit
and
the light source and detector are positioned relative to one another in such a manner that the light intensity of specularly reflected radiation at the detector when the test element is correctly positioned, is different from a light intensity when it is incorrectly positioned such that a faulty positioning can be detected on the basis of the different light intensities of the specularly reflected radiation **characterized in that** the evaluation unit detects a vertical deviation of the position of the test element on the basis of the light intensity at the detector when the test element has been correctly positioned in the longitudinal direction.

2. System according to claim 1, in which the light source and detector are arranged relative to one another in such a manner that when the test element is correctly positioned, specularly reflected radiation falls on the detector and the proportion of specularly reflected radiation decreases when a faulty positioning occurs.

3. System according to claim 1, in which the light source and detector are arranged relative to one another in such a manner that when the test element is correctly positioned, the proportion of radiation specularly reflected from the test element is small or zero and is larger when the test element is incorrectly positioned.

4. System according to claim 1, in which the analytical unit is used to irradiate the analytical area and the concentration of an analyte is determined on the basis of the radiation reflected from the analytical area or transmitted through the analytical area.

5. System according to claim 4, in which the analytical unit uses the detector of the position control unit to detect radiation.

6. System according to claim 4, in which the analytical unit uses the light source of the position control unit to irradiate the analytical area.

7. System according to claim 1, in which the holder is designed such that a test element which is deformable along its longitudinal axis, is held in an area at one end of the axis by the holder in such a manner that a faulty positioning of an analytical area that is at a distance from the held end, relative to the analytical unit occurs when the test element is bent along its longitudinal axis.

8. System according to claim 1 or 5, in which the analytical unit has a measuring light source and a control unit sequentially actuates the measuring light source and the light source of the position control unit.

9. System according to claim 8, in which the measuring light source irradiates the analytical area at an angle of α and the light source of the position control unit irradiates the analytical area at an angle of β relative to the normal plane whereby α < β.

10. System according to claim 1, in which the position control unit comprises a second light source which is positioned relative to the detector in such a manner that at the detector the light intensity of this radiation reflected from the test element changes inversely to the light intensity of the light source for position control when the test element is moved away from its correct position.

11. System according to claims 2 and 10, in which the proportion of specularly reflected radiation of the light source for position control increases at the detector when a faulty positioning occurs.

12. Method for analysing sample liquids by evaluating test elements using an analytical unit in which a position control unit is used to check whether an analytical area (11) of the test element is positioned correctly relative to the analytical unit for which purpose an area of the test element, preferably the analytical area, is irradiated by a light source (30, 2), radiation reflected from the area is detected by a detector (31, 131) and a signal generated by the detector is recorded by an evaluation unit in order to check the positioning of the analytical area wherein the light source and detector are positioned relative to one another in such a manner that the intensity of radiation at the detector that has been specularly reflected from the test element is different when the analytical area is correctly positioned than the intensity when it is incorrectly positioned, **characterized in that** a vertical deviation of the position of the test element can be detected on the basis of the different light intensities of the specularly reflected radiation when the test element has been correctly positioned in the longitudinal direction.

13. Method according to claim 12, in which the analytical unit has a separate light source (1a, 1b) but the detector (131) of the position control unit is used for detection and the light source (2) of the position control unit is actuated at a time point T_{K} and the measuring light source is actuated at a time point T_{A} and the position of the analytical area is checked on the basis of the signal generated by the detector at time point T_{K} and an evaluation to determine the concentration of an analyte is carried out based on the signal generated at time point T_{A}.

14. Method as claimed in claim 13, in which the time points T_{K} and T_{A} are less than one second apart.

## Revendications

1. Système d'analyse d'échantillons liquides par détermination d'éléments de test à l'aide d'une unité d'analyse (20), dans lequel l'élément de test (10) à analyser est positionné au moyen d'un élément de fixation (21, 22, 120, 140) dans une position d'analyse par rapport à l'unité d'analyse et le système contient en outre une unité de contrôle de position pour contrôler si une zone d'analyse de l'élément de test est positionnée de manière conforme par rapport à l'unité d'analyse, l'unité de contrôle de position comprenant
- une source lumineuse (30, 2) pour éclairer une surface de l'élément de test, de préférence la zone à analyser (11),
- un détecteur (31, 131) destiné à détecter la lumière réfléchie par la surface, et
- une unité d'évaluation,
et
la source lumineuse et le détecteur sont positionnés l'un par rapport à l'autre de façon à ce que l'intensité lumineuse du rayonnement réfléchi à la manière d'un miroir au détecteur est différente, dans la position conforme de l'élément de test, de l'intensité lumineuse issue d'une position défectueuse, de telle sorte qu'en se basant sur la différence des intensités lumineuses, du rayonnement réfléchi à la manière d'un miroir, un positionnement puisse être reconnu défectueux, **caractérisé en ce que** l'unité d'évaluation reconnaît, lorsque l'élément de test est positionné pour la détermination dans le sens de la longueur, un écart de positionnement vertical de l'élément de test, en se basant sur l'intensité lumineuse présente sur le détecteur.

2. Système selon la revendication 1, dans lequel la source lumineuse et le détecteur sont positionnés l'un par rapport à l'autre de façon à ce que l'intensité lumineuse du rayonnement réfléchi à la manière d'un miroir dans la position conforme de l'élément de test tombe sur le détecteur et que la proportion de rayonnement réfléchi à la manière d'un miroir diminue lorsque l'élément de test est dans une position défectueuse.

3. Système selon la revendication 1, dans lequel la source lumineuse et le détecteur sont positionnés l'un par rapport à l'autre de façon à ce que la proportion du rayonnement réfléchi à la manière d'un miroir dans la position conforme de l'élément de test soit faible ou nulle, et que dans une position défectueuse de l'élément de test, elle soit plus élevée.

4. Système selon la revendication 1, dans lequel la zone d'analyse est irradiée à l'aide de l'unité d'analyse, et la concentration d'un analyte est déterminée en se basant sur le rayonnement réfléchi ou transmis par la zone d'analyse.

5. Système selon la revendication 4, dans lequel l'unité d'analyse utilise le détecteur de l'unité de contrôle de position pour la détection du rayonnement.

6. Système selon la revendication 4, dans lequel l'unité d'analyse utilise la source lumineuse de l'unité de contrôle de position pour irradier la zone d'analyse.

7. Système selon la revendication 1, dans lequel l'élément de fixation est conçu de telle façon, qu'un élément de test qui est déformable suivant son axe longitudinal soit maintenu par l'élément de fixation dans la zone située à une extrémité de l'axe de façon à ce que lors de la déformation de l'élément de test suivant son axe longitudinal, il se produise un positionnement défectueux d'une zone d'analyse, qui est située à une certaine distance de l'extrémité maintenue, par rapport à l'unité d'analyse.

8. Système selon la revendication 1 ou 5, dans lequel l'unité d'analyse comprend une source lumineuse de mesure et une unité de commande qui commande séquentiellement la source lumineuse de mesure et la source lumineuse de l'unité de contrôle de position.

9. Système selon la revendication 8, dans lequel la source lumineuse de mesure irradie la zone d'analyse sous un angle α et la source lumineuse de l'unité de contrôle de position irradie la zone d'analyse sous un angle β par rapport à la normale à la surface, avec : α<β.

10. Système selon la revendication 1, dans lequel l'unité de contrôle de position comprend une deuxième source lumineuse qui est positionnée par rapport au détecteur de telle façon, que l'intensité lumineuse de ce rayonnement réfléchi par l'élément de test sur le détecteur se transforme de façon inverse à l'intensité lumineuse de la source lumineuse du contrôle de position lorsque l'élément de test est déplacé depuis la position conforme.

11. Système selon l'une des revendications 2 et 10, dans lequel la proportion du rayonnement réfléchi à la manière d'un miroir de la source lumineuse du contrôle de position sur le détecteur augmente dans le cas d'une position défectueuse.

12. Procédé d'analyse d'échantillons liquides par évaluation d'éléments de test à l'aide d'une unité d'analyse, dans lequel une unité de contrôle de position permet de contrôler si une zone d'analyse (11) de l'élément de test est positionnée de manière conforme par rapport à l'unité d'analyse, une surface de l'élément de test, de préférence la zone d'analyse, étant à cet effet irradiée par une source lumineuse (30,2), le rayonnement réfléchi par la surface étant détecté par un détecteur (31, 131) et un signal émis par le détecteur étant saisi par une unité d'évaluation, afin de contrôler le positionnement de la zone d'analyse, la source lumineuse et le détecteur étant positionnés de telle façon l'un par rapport à l'autre que l'intensité du rayonnement réfléchi à la manière d'un miroir par l'élément de test sur le détecteur, dans le cas où la zone d'analyse est dans la position conforme, soit différente de telle sorte d'une intensité obtenue dans le cas d'une position défectueuse, **caractérisé en ce que**, en se basant sur la différence entre les intensités lumineuses des rayonnements réfléchis à la manière d'un miroir, l'écart de position vertical de l'élément de test peut être reconnu dans le cas du positionnement conforme dans le sens de la longueur.

13. Procédé selon la revendication 12, dans lequel l'unité d'analyse présente une source lumineuse (1a, 1b) séparée, toutefois, pour effectuer la détection, l'unité de contrôle de position utilise le détecteur (131), et la source lumineuse (2) de l'unité de contrôle de position est actionnée jusqu'à un instant T_{K} et la source lumineuse de mesure est actionnée à un instant T_{A}, et en se basant sur les signaux fournis par le détecteur à l'instant T_{K}, il se produit un contrôle de la position de la zone d'analyse, et en se basant sur les signaux émis à l'instant T_{A}, il se déroule une évaluation pour déterminer la concentration d'un analyte.

14. Procédé selon la revendication 13, dans lequel l'instant T_{K} et T_{A} sont séparés entre eux par moins d'une seconde.
